# FASCICULE DE BREVET EUROPEEN

(11) **EP 0 781 044 B1**
(45) Date de publication et mention de la délivrance du brevet: **12.09.2001**
(21) Numéro de dépôt: 96203525.9
(22) Date de dépôt: 12.12.1996
(51) Int. Cl.: H04N 5/63, H04N 3/223

(54) **Appareil d'affichage d'images sur un tube à rayons cathodiques**
Vorrichtung zur Anzeige von Bildern auf einer Bildschirmröhre
Apparatus for displaying pictures on a cathode ray tube

(30) Priorité: 20.12.1995 FR 9515176
(43) Date de publication de la demande: 25.06.1997
(73) Titulaire: Koninklijke Philips Electronics N.V., 5621 BA Eindhoven (NL)
(72) Inventeur: Decramer, Alain, 75008 Paris (FR)
(74) Mandataire: Charpail, François

(56) Documents cités:
- EP-A- 0 475 056
- US-A- 4 414 494
- US-A- 5 034 667

## Description

La présente invention concerne un appareil d'affichage d'images, muni d'un tube écran à faisceau cathodique, et comprenant un circuit, dit "de puissance lignes", générant d'une part un courant pour la déviation horizontale du faisceau cathodique, et d'autre part une tension dite "très haute tension" nécessaire pour l'écran du tube, un module d'alimentation spécifiquement destiné à l'alimentation du circuit de puissance lignes et délivrant une tension réglable, dont la valeur est commandée par une valeur de commande, et un agencement générateur de cette valeur de commande, comprenant essentiellement un comparateur dont une première entrée est connectée à une source de tension de référence, et ayant une seconde entrée à laquelle est amenée une fraction de la susdite tension réglable, la dite fraction de la tension réglable étant formée au moyen d'un diviseur résistif fait d'une première branche dite "de tête" qui est connectée entre, d'une part le module d'alimentation et d'autre part la seconde entrée du comparateur, et d'une seconde branche dite "de pied" qui est connectée entre, d'une part la seconde entrée du comparateur, et, d'autre part une tension de référence.

Une alimentation régulée avec une limitation de courant, intitulée "Overload protection for series regulator", est présentée page 594 de l'ouvrage "Sourcebook of electronic circuits", par John Markus, éditions Mac Graw Hill, 1968. Cette alimentation dispose d'une limitation de courant qui est réalisée par un circuit, distinct du circuit de régulation de la tension, et qui entre en jeu seulement au delà d'un seuil de courant prédéterminé.

Dans le cas d'un téléviseur, un problème particulier se pose. Il se produit l'effet suivant, bien connu de l'homme de l'art : si un utilisateur, au moyen des facilités de réglage qui lui sont offertes, augmente la luminosité de l'image affichée sur son écran, le courant de faisceau du tube écran augmente, et cela fait chuter la très haute tension, à cause de la résistance interne propre du générateur de très haute tension, et la diminution de la très haute tension entraîne que l'image affichée s'agrandit. Pour contrebalancer cet effet, il est d'usage d'introduire une résistance, habituellement de l'ordre d'une dizaine d'ohms, en série dans la connexion d'alimentation du circuit de puissance lignes. L'effet procuré par cette résistance est le suivant : si le courant appelé sur la très haute tension augmente à cause de l'augmentation du courant de faisceau du tube écran, le courant consommé par le circuit générateur de très haute tension augmente, or, puisqu'un seul et même circuit engendre à la fois le balayage ligne et la très haute tension, c'est en fin de compte le courant du circuit de puissance lignes qui augmente, et il en résulte que, du fait de la résistance d'une dizaine d'ohms, la tension d'alimentation du circuit de puissance lignes diminue et par suite l'amplitude du balayage aussi, ce qui contrebalance l'agrandissement de l'image dû à la diminution de la très haute tension.

Un objet de l'invention est de supprimer la résistance d'une dizaine d'ohms, car elle dissipe en permanence une puissance non négligeable.

A cet effet, le circuit de puissance lignes est connecté à une prise sur le dit diviseur résistif, de telle manière que le courant d'alimentation du circuit de puissance lignes traverse une partie du diviseur.

L'invention est donc basée sur l'idée de dégrader volontairement les performances de régulation du dispositif qui produit la tension d'alimentation du circuit de puissance lignes, de façon à produire le même effet que si une résistance d'une dizaine d'ohms était placée dans la connexion d'alimentation. Bien qu'elle produise le même effet que la résistance d'une dizaine d'ohms de l'art antérieur, la partie de résistance qui est traversée par le courant d'alimentation du circuit de puissance lignes a une valeur d'une fraction d'ohm seulement, ce qui procure une économie de puissance.

Selon un mode de réalisation préféré, la partie du diviseur résistif, que le courant d'alimentation du circuit de puissance lignes traverse, fait partie de la branche de tête du diviseur, et une source de tension fixe est connectée, pour générer la tension de référence, entre, d'une part la sortie du module d'alimentation délivrant une tension réglable, et d'autre part la première entrée du comparateur.

Ces aspects de l'invention ainsi que d'autres aspects plus détaillés apparaîtront plus clairement grâce à la description suivante d'un mode de réalisation constituant un exemple non limitatif.

La figure 1 représente schématiquement un appareil d'affichage d'images muni d'un tube écran à faisceau cathodique.

La figure 2 représente schématiquement un premier mode de réalisation d'un dispositif qui produit une tension d'alimentation pour un circuit de puissance lignes.

La figure 3 représente schématiquement un deuxième mode de réalisation d'un dispositif qui produit une tension d'alimentation pour un circuit de puissance lignes.

L'invention va être décrite en référence à un téléviseur, mais elle s'applique aussi bien à tout appareil d'affichage d'images, par exemple à un moniteur.

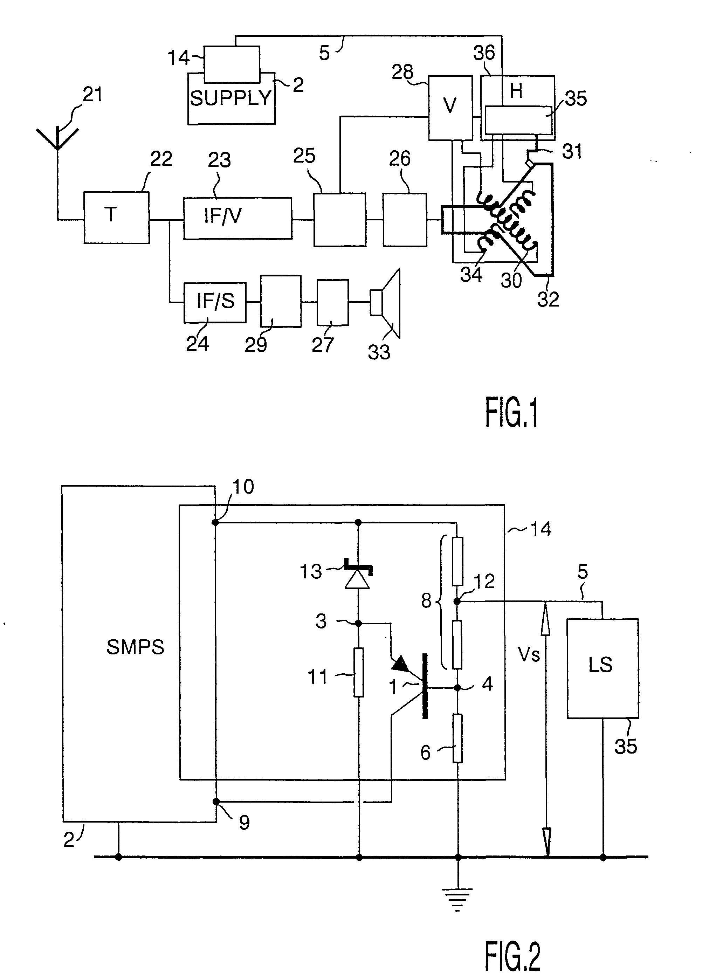

Le téléviseur dont le schéma est représenté sur la figure 1 comprend un syntoniseur 22 recevant un signal par exemple d'une antenne 21 et transposant sa fréquence vers des fréquences intermédiaires destinées à un amplificateur à fréquence intermédiaire vidéo 23 et à un amplificateur à fréquence intermédiaire son 24 qui lui font suite. L'amplificateur à fréquence intermédiaire son 24 est suivi d'un démodulateur 29 qui délivre les signaux audio en bande de base à un amplificateur de puissance audio 27, alimentant un haut-parleur 33. L'amplificateur à fréquence intermédiaire vidéo 23 est suivi d'une unité 25 qui fournit un signal vidéo en bande de base à un amplificateur vidéo 26 délivrant les signaux ad-hoc aux électrodes d'un tube écran 32 à faisceau cathodique. L'unité 25 extrait aussi du signal des signaux de synchronisation qui sont amenés à un circuit de balayage trame 28 et à un circuit de balayage ligne 36. Le circuit de balayage trame 28 délivre un courant dans un bobinage déviateur 30 de trame. Le circuit de balayage ligne est muni d'une unité de puissance lignes 35 qui délivre un courant dans un bobinage déviateur 34 de ligne, et produit une tension dite "très haute tension", d'environ 25 kV, pour alimenter l'écran du tube écran, auquel elle est reliée par une connexion 31. Le circuit de puissance lignes 35 est alimenté via une connexion 5, par un module spécifique d'alimentation 14, lui même alimenté par une alimentation générale 2, reliée au secteur. Les autres circuits 22-29 sont alimentés, comme cela est habituel, à partir de l'étage de puissance lignes 35, par des connexions non représentées pour simplifier la figure.

Le dispositif représenté par la figure 2 comprend :
- un circuit de puissance lignes 35 qui correspond à celui de la figure 1 et qui est alimenté, via la connexion 5, sous une tension Vs, entre une borne 12 et la masse.
- un module d'alimentation 14, lui même alimenté par une alimentation générale 2, reliée au secteur, qui correspondent aux éléments portant les mêmes références sur la figure 1. L'alimentation 2 fournit, sur une borne 10, par rapport à la masse, une tension d'alimentation réglable, par exemple positive. Le réglage de la tension est obtenu au moyen d'une valeur de commande appliquée à une entrée de commande de tension 9; l'alimentation 2 est par exemple un générateur à découpage, connu sous l'acronyme SMPS, dont il existe quantité de variantes connues de l'homme de l'art, toutes réglables par une valeur de commande. Bien entendu, il peut aussi s'agir de tout autre type d'alimentation connue, pourvu que la tension produite puisse être commandée par une valeur de commande, tension ou courant.

Dans le module d'alimentation 14, un agencement générateur de la valeur de commande comprend essentiellement
- un comparateur, constitué ici par un transistor 1, par exemple de type PNP; son émetteur constitue la première entrée 3 du comparateur, sa base constitue la seconde entrée 4 du comparateur, son collecteur constitue la sortie, reliée à l'entrée de commande 9; quantité d'autres modèles connus de comparateur peuvent aussi bien être utilisés, parmi lesquels, entre autres, une paire différentielle;
- une diode zener 13, qui constitue une source de tension de référence et est connectée entre, d'une part la borne 10 du module d'alimentation, délivrant une tension réglable, et d'autre part l'émetteur du transistor 1 constituant la première entrée 3 du comparateur; une résistance 11 entre la diode zener et la masse permet le passage d'un courant dans la diode zener;
- un pont diviseur fait d'une première branche dite "de tête" qui comprend la résistance 8 et est connectée entre, d'une part la borne 10 du module d'alimentation 14, et, d'autre part la seconde entrée 4 du comparateur, et d'une seconde branche dite "de pied" qui comprend la résistance 6 et qui est connectée entre, d'une part la seconde entrée 4 du comparateur, et, d'autre part une tension de référence, ici la masse. Une fraction de la tension réglable présente sur la borne 10 est ainsi formée aux bornes des résistances 8 et 6 en série, et est appliquée à la base du transistor 1.

La connexion 5 d'alimentation du circuit 35 de puissance lignes est connectée à une prise 12 de la résistance 8. De ce fait, une partie de cette résistance 8 est traversée par le courant d'alimentation du circuit de puissance lignes.

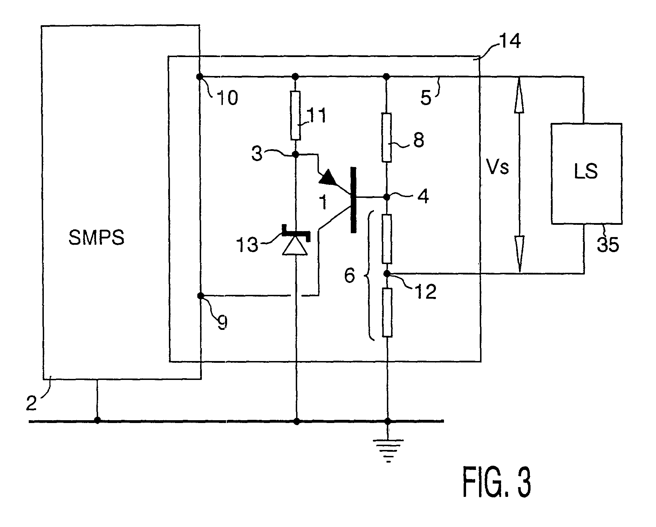

Un dispositif voisin est représenté par la figure 3. Dans ce dispositif, la plupart des éléments sont identiques à ceux de la figure 2, notamment l'alimentation 2, le circuit de puissance lignes 35, le transistor 1, la première et la seconde entrée 3 et 4 du comparateur. La différence entre le montage de la figure 3 et celui de la figure 2 tient dans le fait que la diode zener 13 est maintenant connectée entre le point 3 et la masse, et que le circuit de puissance lignes est connecté du côté positif directement à la borne 10, et à la masse via une partie de la résistance 6, par une prise 12. De ce fait, la résistance 6 est traversée en partie par le courant d'alimentation du circuit de puissance lignes. La résistance 11 qui permet le passage d'un courant dans la diode zener est connectée entre la borne 10 du module d'alimentation et l'émetteur du transistor 1.

Le dispositif de la figure 2 est toutefois préféré parce que le circuit de puissance lignes y est connecté directement à la masse.

L'indication de quelques valeurs numériques, en référence à la figure 2, permettra de mettre en lumière pourquoi le même effet que si une résistance de dix ohms était placée dans la connexion d'alimentation, est obtenu. La diode zener 13 est par exemple un modèle "5V2", qui fournit une tension de 5,2 volts. En allant du point 10 au point 4 via la diode 13, on rencontre, en cascade, la tension de zener 13 et la tension émetteur-base du transistor 1, ce qui procure environ 6 volts. Cette tension est également présente aux bornes de la résistance 8. Si la tension désirée au point 10 est de 96 volts, par exemple, il doit donc y avoir 6 volts aux bornes de la résistance 8, et 90 volts aux bornes de la résistance 6. La tension aux bornes de la résistance 8 est en quelque sorte multipliée par le rapport entre les résistances 6+8 et: 8, du fait de la tension d'erreur appliquée à l'entrée 9 du circuit 14 . La tension induite par le passage du courant d'alimentation du circuit de puissance lignes dans une partie de la résistance 8 est, elle aussi, multipliée par le rapport entre les résistances 6+8 et 8, et procure le même effet qu'une résistance de dix ohms placée dans la connexion d'alimentation entre le point 12 et le circuit 35, bien que la partie du haut de la résistance 8 ait une valeur d'environ 0,6 ohms, c'est-à-dire 10 Ω × 6/96.

Un circuit de puissance lignes consomme, par exemple dans le cas d'un tube écran 110° de dimensions moyennes, sous 96 volts, environ 700 milliampères, ce qui dissipe environ cinq watts dans une résistance de 10 ohms. Ces cinq watts sont économisés avec le montage selon l'invention.

## Revendications

1. Appareil d'affichage d'images, muni d'un tube écran (32) à faisceau cathodique, et comprenant :
- un circuit (35), dit "de puissance lignes", générant d'une part un courant pour la déviation horizontale du faisceau cathodique, et d'autre part une tension dite "très haute tension" nécessaire pour l'écran du tube;
- un module d'alimentation (2) spécifiquement destiné à l'alimentation du circuit de puissance lignes (35) et délivrant une tension réglable, dont la valeur est commandée par une valeur de commande (9);
- et un agencement (14) générateur de cette valeur de commande, comprenant essentiellement un comparateur (1) dont une première entrée (3) est connectée à une source de tension de référence (13), et ayant une seconde entrée (4) à laquelle est amenée une fraction de la susdite tension réglable, la dite fraction de la tension réglable étant formée au moyen d'un diviseur résistif fait d'une première branche dite "de tête" (8) qui est connectée entre, d'une part le module d'alimentation (2), et d'autre part la seconde entrée (4) du comparateur, et d'une seconde branche dite "de pied" (6) qui est connectée entre, d'une part la seconde entrée du comparateur (4), et, d'autre part une tension de référence,
**caractérisé en ce que** le circuit de puissance lignes (35) est connecté à une prise (12) sur le dit diviseur résistif, de telle manière que le courant d'alimentation du circuit de puissance lignes traverse une partie du diviseur.

2. Appareil d'affichage d'images, selon la revendication 1, **caractérisé en ce que** la partie du diviseur résistif (8, figure 2), que le courant d'alimentation du circuit de puissance lignes traverse, fait partie de la branche de tête du diviseur, et la source de tension de référence (13) est connectée entre, d'une part la sortie du module d'alimentation (2) délivrant une tension réglable, et d'autre part la première entrée (3) du comparateur.

## Claims

1. A picture display device provided with a cathode ray tube (32) and comprising:
- a line output stage (35) generating a current for the horizontal deflection of the cathode beam and a voltage referred to as "extra-high tension" required for the screen of the tube;
- a power supply module (2) specifically intended for the power supply of the line output stage (35) and supplying a controllable voltage having a value which is controlled by a control value (9);
- and an arrangement (14) for generating said control value, essentially comprising a comparator (1), of which a first input (3) is connected to a reference voltage source (13) and a second input (4) receives a fraction of said controllable voltage, said controllable voltage fraction being formed by means of a resistive divider consisting of a first branch, referred to as "front-end" (8), connected between the power supply module (2) and the second input (4) of the comparator, and a second branch, referred to as "rear-end" (6), connected between the second input of the comparator (4) and a reference voltage,
**characterized in that** the line output stage (35) is connected to a terminal (12) of said resistive divider in such a way that the power supply current for the line output stage flows through a part of the divider.

2. A picture display device as claimed in claim 1, **characterized in that** the part of the resistive divider (8, Fig. 2) traversed by the power supply current for the line output stage forms part of the front-end branch of the divider, and the reference voltage source (13) is connected between the output of the power supply module (2) supplying a controllable voltage and the

## Patentansprüche

1. Vorrichtung zur Anzeige von Bildern, versehen mit einer Bildschirmröhre (32), und mit:
- einer Schaltung (35) für die sogenannte "Zeilenleistung", die einerseits einen Strom für die Horizontalablenkung der Bildschirmröhre, und andererseits eine für die Bildschirmröhre erforderliche, sogenannte "sehr hohe Spannung" erzeugt;
- ein speziell für die Versorgung der Zeilenleistungsschaltung (35) vorgesehenes Versorgungsmodul (2), das eine Regelspannung liefert, deren Wert von einem Steuerwert (9) gesteuert wird;
- und eine diesen Steuerwert erzeugende Anordnung (14), die prinzipiell aus einem Vergleicher (1) besteht, dessen erster Eingang (3) an eine Bezugsspannungsquelle (13) angeschlossen ist, und mit einem zweiten Eingang (4), dem ein Bruchteil der besagten Regelspannung zugeführt wird, wobei der besagte Bruchteil der Regelspannung von einem resistiven Teiler gebildet wird, bestehend aus einem ersten Zweig, dem sogenannten "Kopf" (8), der einerseits zwischen dem Versorgungsmodul (2) und andererseits dem zweiten Eingang (4) des Vergleichers angeschlossen ist, und einem zweiten Zweig, dem sogenannten "Fuß" (6), der einerseits zwischen dem zweiten Eingang (4) des Vergleichers und andererseits der Bezugsspannung angeschlossen ist,
**dadurch gekennzeichnet, daß** die Zeilenleistungsschaltung (35) an eine Klemme (12) des besagten resistiven Teilers angeschlossen ist, damit der Versorgungsstrom der Zeilenleistungsschaltung einen Teil des Teilers durchläuft.

2. Vorrichtung zur Anzeige von Bildern nach Anspruch 1, **dadurch gekennzeichnet, daß** der Teil des resistiven Teilers (8, Figur 2) den der Versorgungsstrom der Zeilenleistungsschaltung durchläuft, Teil des Kopfzweiges des Teilers ist und die Bezugsspannungsquelle (13) einerseits zwischen dem Ausgang des die Regelspannung abgebenden Versorgungsmoduls (2) und andererseits dem ersten Eingang (3) des Vergleichers angeschlossen ist.
